# DEMANDE DE BREVET EUROPEEN

(11) **EP 2 642 775 A1**
(43) Date de publication de la demande: **25.09.2013**
(21) Numéro de dépôt: 12305341.5
(22) Date de dépôt: 23.03.2012
(51) Int. Cl.: H04W 4/12

(54) **Procédé d'indexation de segments de vidéo**

(71) Demandeur: Alcatel Lucent, 75007 Paris (FR)
(72) Inventeur: Delegue, Gérard, 91620 NOZAY (FR); Squedin, Sylvain, 91620 NOZAY (FR)
(74) Mandataire: Sciaux, Edmond

(57) **Abrégé**

Procédé d'indexation de segments de vidéo avec des tags vidéo permettant de localiser l'endroit où a été prise la vidéo caractérisé en ce que l'indexation comprend la description de la localisation géographique du lieu et l'azimut et la hauteur de l'appareil permettant l'enregistrement de la vidéo.

## Description

L'invention concerne un procédé d'indexation de segments de vidéo pour un utilisateur, une architecture de mise en oeuvre d'un tel procédé.

Lorsqu'un utilisateur veut retrouver et regarder une vidéo enregistrée dans une base de données sur une plateforme vidéo, il utilise des tags vidéos enregistrés pour indexer chaque vidéo enregistrée dans la base de données dans la plateforme vidéo.

Ces tags vidéo associés à chaque vidéo enregistrée dans la base de données dans la plateforme vidéo sont par exemple les coordonnées de position géographique de l'endroit où a été prise la vidéo.

Ces tags vidéo sont donc des résumés de la vidéo pour pouvoir la retrouver plus facilement dans la base de données.

Cependant, il n'est pas toujours possible pour l'utilisateur de localiser précisément l'endroit où a été prise la vidéo car la description de la localisation géographique du lieu enregistrée dans le tag vidéo associé n'est pas assez précise.

Certaines applications comme vidcinity® ou vidmap® permettent à un utilisateur de décrire la localisation géographique du lieu où a été prise la vidéo enregistrée dans la base de données dans la plateforme vidéo, mais l'indexation de la vidéo est manuelle et doit ^etre faite par l'utilisateur lui-même .

Le document WO 2008154561 propose en particulier une méthode pour indexer une vidéo avec des coordonnées géographiques.

Mais cette méthode ou ces applications ne donnent donc pas entière satisfaction, en ce que l'utilisateur n'a pas une description de la localisation géographique du lieu enregistrée dans le tag vidéo associé assez précise et l'orientation de la caméra en terme d'azimut et de hauteur n'est pas prise en compte.

L'invention vise à perfectionner l'art antérieur en proposant notamment un procédé permettant à un utilisateur l'indexation de segments de vidéo avec des tags vidéo permettant de localiser précisément l'endroit où a été prise la vidéo avec la description de la localisation géographique du lieu et l'azimut et la hauteur de la caméra de façon très précise.

A cet effet, selon un premier aspect, l'invention propose un procédé d'indexation de segments de vidéo avec des tags vidéo permettant de localiser l'endroit où a été prise la vidéo **caractérisé en ce que** l'indexation comprend la description de la localisation géographique du lieu et l'azimut et la hauteur de l'appareil permettant l'enregistrement de la vidéo.

Selon un deuxième aspect, l'invention propose une architecture d'indexation de segments de vidéo avec des tags vidéo permettant de localiser l'endroit où a été prise la vidéo **caractérisé en ce que** l'indexation comprend la description de la localisation géographique du lieu et l'azimut et la hauteur de l'appareil permettant l'enregistrement de la vidéo.

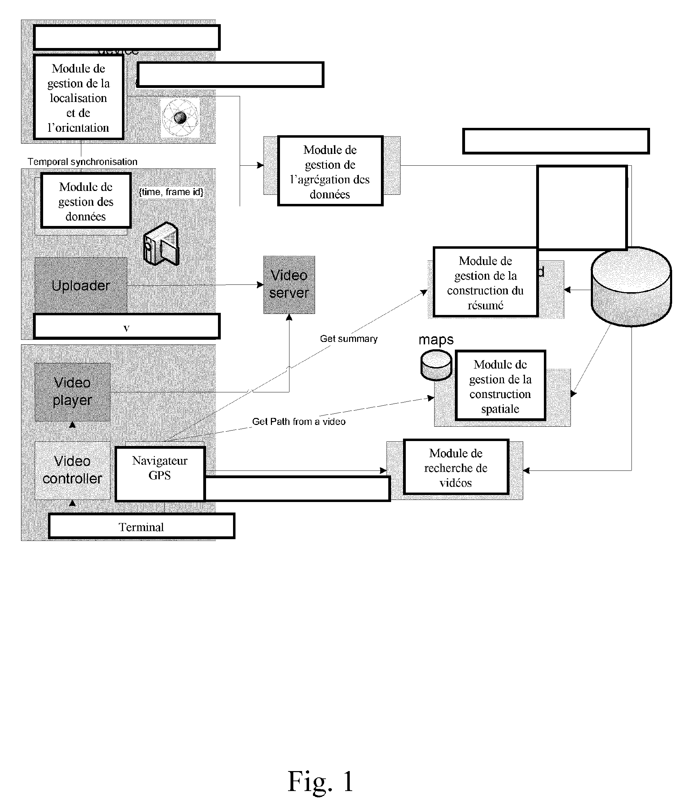

D'autres particularités et avantages de l'invention apparaîtront dans la description qui suit, faite en référence à la figure jointe représentant une architecture de planification des enregistrements de programmes de télévision pour un utilisateur selon un mode de réalisation de l'invention.

En relation avec cette figure, on décrit ci-dessous une architecture permettant l'indexation de segments de vidéo avec des tags vidéo permettant de localiser précisément l'endroit où a été prise la vidéo avec la description de la localisation géographique du lieu et l'azimut et la hauteur de la caméra selon l'invention.

Cette architecture comprend un module de gestion de la localisation et de l'orientation en charge de localiser géographiquement la position et l'orientation de l'appareil procédant à l'enregistrement de la vidéo.

A intervalles réguliers, la localisation géographique et la position de l'appareil procédant à l'enregistrement de la vidéo sont enregistrés dans une base de données de la plateforme vidéo.

Ce module comprend des moyens pour localiser de façon automatique géographiquement la position et l'orientation de l'appareil procédant à l'enregistrement de la vidéo.

Ceci est réalisé avec un GPS® embarqué dans l'appareil procédant à l'enregistrement de la vidéo afin de permettre l'indexation automatique de segments de vidéo avec des tags vidéo permettant de localiser précisément l'endroit où a été prise la vidéo pour un utilisateur visionnant cette vidéo

L'horloge de ce module ets synchronisée avec l'horloge de l'appareil procédant à l'enregistrement de la vidéo.

Pour ce faire, on utilise le système bien connu DCF77 pour permettre aux deux horloges de recevoir les mêmes signal d'horloge et de se synchroniser.

Le module de gestion des données ajoute des données au contenu vidéo décrivant la date de l'enregistrement de chaque segment de vidéo.

Le module d'agrégation des données vidéo de chaque segment de vidéo permet le filtrage et la corrélation des données reçues à la fois du module de gestion de la localisation et de l'orientation en charge de localiser géographiquement la position et l'orientation de l'appareil procédant à l'enregistrement de la vidéo, et, du module de gestion des données ajoute des données au contenu vidéo décrivant la date de l'enregistrement de chaque segment de vidéo.

Ce module d'agrégation des données vidéo de chaque segment de vidéo permet de lier chaque segment de vidéo à une orientation et une localisation de l'appareil procédant à l'enregistrement de la vidéo et à une date d'enregistrement précise.

Le module de gestion de la construction spatiale du chemin parcouru par l'appareil procédant à l'enregistrement de la vidéo, permet le calcul du chemin effectué par l'appareil procédant à l'enregistrement de la vidéo pendant l'enregistrement de cette vidéo.

Le module de construction de la vidéo indexée permet de construire l'indexation de la vidéo par des tags vidéo basés sur la localisation géographique de la position et l'orientation de l'appareil procédant à l'enregistrement de la vidéo.

Des séquences de vidéo comprennent des segments de vidéo de la même durée pour différentes localisations géographiques.

Il est possible de masquer des segments de vidéos correspondants à des orientations données de l'appareil procédant à l'enregistrement de la vidéo.

La vidéo peut être affichée sur une carte.

Le module de gestion de la recherche de segments de vidéo permet à l'utilisateur de retrouver des segments de vidéos pris dans un lieu donné.

Le résultat de la recherche est fourni à l'utilisateur sous forme d'une liste de segments de vidéo avec la date de départ de chaque segment de vidéo.

Selon une réalisation non représentée, l'utilisateur peut également enregistrer manuellement l'indexation de segments de vidéo avec des tags vidéo permettant de localiser précisément l'endroit où a été prise la vidéo avec la description de la localisation géographique du lieu et l'azimut et la hauteur de la caméra.

En outre, le procédé peut prévoir de stocker les indexations générées dans au moins une base de données en vue de leur partage avec au moins un autre utilisateur.

En particulier, des vidéo indexées générées par un premier utilisateur peuvent être partagées avec un deuxième autre utilisateur appartenant à une même communauté que le premier utilisateur, notamment une communauté d'un réseau social tel que Facebook® ou Twitter®.

Pour ce faire, le module de construction de la vidéo indexée permettant de construire l'indexation de la vidéo par des tags vidéo basés sur la localisation géographique de la position et l'orientation de l'appareil procédant à l'enregistrement de la vidéo peut être apte à envoyer une notification comprenant au moins une à partager et le module 28 peut comprendre des moyens pour envoyer une vidéo indexées générées par un premier utilisateur à un serveur de fourniture d'un réseau social, ledit serveur comprenant au moins une base de données propre à la communauté à laquelle appartient le premier utilisateur et dans laquelle ladite vidéo indexée est stockée, afin que les deuxièmes autres utilisateurs membres de cette communauté puissent accéder à ladite vidéo indexée.

En outre, les vidéos indexées peuvent être affichées sur le terminal fixe ou mobile de l'utilisateur, tel qu'un téléphone mobile ou une télévision ou un ordinateur.

L'utilisateur peut alors regarder les vidéos de son choix, sur son terminal ou une télévision ou un ordinateur.

## Revendications

1. Procédé d'indexation de segments de vidéo avec des tags vidéo permettant de localiser l'endroit où a été prise la vidéo **caractérisé en ce que** l'indexation comprend la description de la localisation géographique du lieu et l'azimut et la hauteur de l'appareil permettant l'enregistrement de la vidéo.

2. Procédé d'indexation selon la revendication 1, **caractérisé en ce qu'**il prévoit de stocker les indexations générées par un premier utilisateur dans au moins une base de données en vue de leur partage avec au moins un autre deuxième utilisateur.

3. Procédé d'indexation selon la revendication 1 ou 2, **caractérisé en ce qu'**il prévoit d'enrichir les recommandations générées pour l'autre deuxième utilisateur en fonction des indexations partagées par au moins une communauté à laquelle appartient le premier utilisateur.

4. Procédé d'indexation selon l'une quelconque des revendications 1 à 4, **caractérisé en ce que** l'indexation de segments de vidéo avec des tags vidéo permettant de localiser l'endroit où a été prise la vidéo est faite automatiquement avec l'application GPS embarquée dans l'appareil permettant l'enregistrement de la vidéo.

5. Procédé d'indexation selon l'une quelconque des revendications 1 à 4, **caractérisé en ce que** l'indexation de segments de vidéo avec des tags vidéo permettant de localiser l'endroit où a été prise la vidéo est faite manuellement par l'utilisateur

6. Architecture d'indexation de segments de vidéo avec des tags vidéo permettant de localiser l'endroit où a été prise la vidéo **caractérisé en ce que** l'indexation comprend la description de la localisation géographique du lieu et l'azimut et la hauteur de l'appareil permettant l'enregistrement de la vidéo.

7. Architecture d'indexation selon la revendication 6, **caractérisée en ce qu'**elle comprend un module comprenant une base de données dans laquelle les indexations générées par un premier utilisateur sont stockées en vue de leur partage avec au moins un autre deuxième utilisateur.
